# EUROPÄISCHE PATENTSCHRIFT

(11) **EP 3 393 651 B1**
(45) Veröffentlichungstag und Bekanntmachung des Hinweises auf die Patenterteilung: **07.06.2023**
(21) Anmeldenummer: 16837975.8
(22) Anmeldetag: 21.12.2016
(51) Int. Cl.: B01J 19/28, B01J 19/00, B01J 19/08, B01J 19/18

(54) **VERFAHREN ZUR REGELUNG EINER CHEMISCHEN REAKTION**
METHOD FOR CONTROLLING A CHEMICAL REACTION
PROCÉDÉ DE RÉGULATION D'UNE RÉACTION CHIMIQUE

(30) Priorität: 23.12.2015 DE 102015122711; 15.01.2016 DE 102016100620
(43) Veröffentlichungstag der Anmeldung: 31.10.2018
(73) Patentinhaber: HEION GmbH, 23623 Siblin (DE)
(72) Erfinder: LEDWON, Anton, 53842 Troisdorf (DE)
(74) Vertreter: Wagner Albiger & Partner Patentanwälte mbB
(86) Internationale Anmeldenummer: PCT/EP2016/082154
(87) Internationale Veröffentlichungsnummer: WO 2017/108934

(56) Entgegenhaltungen:
- EP-A1- 2 216 312
- EP-A1- 2 551 012
- WO-A1-2009/145954
- DE-A1- 2 446 089
- US-A- 3 410 661
- US-A- 3 534 090

## Beschreibung

Die vorliegende Erfindung betrifft ein Verfahren zur Regelung einer chemischen Reaktion gemäß dem Oberbegriff des unabhängigen Anspruchs.

Das Regeln chemischer Reaktionen ist grundsätzlich bekannt. Der vorliegend beanspruchte Gegenstand ist dabei im Bereich der Synthese-Reaktionen angeordnet, welche das Erzeugen eines benötigten Produkts anstreben.

In diesem allgemeinen, technischen Bereich ist zum Beispiel die DE 1 964 916 A angesiedelt, welche die Reformierung von Kohlenwasserstoffen beschreibt. Hierbei wird ein Gasgemisch anteilig verbrannt und die anfallende Abwärme zur parallelen, thermischen Zerlegung des Gasgemisches bei extrem hohem Druck verwendet. Eine Regelung der Reaktionsdrücke und der Gaszusammensetzung bewirkt hier die Regelung der chemischen Reaktion. Gleichsinnig beschreibt die DE 2 109 027 A einen Katalysator-Träger, dessen Eigenschaften so eingestellt werden, dass eine Reaktion auf dem Träger in der gewünschten Art und Weise ablaufen kann.

Der allgemeine, technische Bereich behandelt hier jedoch keine Systeme, in denen es zu einer Kavitation einer flüssigen Phase kommen könnte. Auf diesen Bereich ist der vorliegend beanspruchte Gegenstand konkret ausgerichtet.

Gattungsgemäße Verfahren betreffen Reaktionsmischungen, welche zumindest anteilig während der Reaktion einer Kavitation mindestens einer flüssigen Phase unterliegen können.

Hierzu offenbart zum Beispiel die US 4 127 332 A ein Verfahren und eine Vorrichtung, bei denen ein mehrkomponentiger Strom von teils flüssigen Phasen einer starken Druckänderung und begleitender Kaviatation unterworfen, zur Reaktion gebracht und homogenisiert wird. Kavitation bringt aber eine extreme Energiespitze in eine Reaktion ein und kann die Ausbeuten dadurch verschlechtern. Entsprechend lehrt die DE 2 943 984 A, dass Kavitation innerhalb eines gepumpten Reaktionsgemisches durch passende Abmischungen und geregelte Fördervolumina sicher vermieden werden sollte. Andererseits findet sich die Lehre, dass bestimmte Reaktionen nur möglich sind, wenn eine Kavitation zuverlässig und sicher gegeben ist - so zum Beispiel in der DE 4 016 076 A. Ergänzend lehrt die DE 10 2008 030 035 A1, dass eine kavitative Erosion vermieden und Kavitation sinnvoll genutzt werden kann, wenn bestimmte Kristalle in einer Reaktionsmischung vorhanden sind.

Nachteilig ist bei den bekannten Verfahren, dass diese entweder Kavitation sicher ausschließen oder aber sicher gewährleisten müssen. Dadurch werden bestimmte, metastabile Verbindungen nicht oder nur mit schlechter Ausbeute zugänglich.

Eine Aufgabe der vorliegenden Erfindung ist es daher, die Nachteile des Standes der Technik zu überwinden und ein Verfahren bereitzustellen, welches trotz einer Reaktionsführung, welche Kavitationseffekte umfasst, präzise Synthesewege und verbesserte Ausbeuten - insbesondere für metastabile Verbindungen - bereitzustellen vermag.

Die Lösung dieser Aufgabe erfolgt gemäß der Merkmale des Anspruchs 1. Vorteilhafte Ausführungsformen ergeben sich aus den abhängigen Verfahrensansprüchen sowie der nachfolgenden Beschreibung.

Erfindungsgemäß wird ein Verfahren zur Regelung einer chemischen Reaktion vorgeschlagen, welche ein Produkt erzeugt, wobei wenigstens ein in flüssiger Phase flüssiges Edukt oder eine mehrkomponentige Reaktionsmischung, welche mehrere Edukte umfasst, von denen mindestens eins in flüssiger Phase vorliegt, einer Druckänderung unterworfen wird, wobei ein Minimalwert des Drucks höchstens 105 %, bevorzugt höchstens 103%, besonders bevorzugt höchstens 101 % einem Kavitationsdruck des wenigstens einen Edukts entspricht, ohne dass es zur Kavitation des Edukts kommt.

Der Kavitationsdruck soll dabei der Druck sein, bei dem das Edukt in die Dampfphase übergeht (Dampfdruck). Bei mehreren Edukten ist der Kavitationsdruck der Druck, bei dem in einem der Edukte als erstes sich kleine Dampfblasen bilden, die implodieren, wenn der Druck der Reaktionsmischung wieder ansteigt. Die zerplatzenden Dampfblasen führen zu unerwünschten Druckspitzen. Das Entstehen und das Implodieren von Dampfblasen führen jedoch zu einer Wärmeentwicklung bzw. zu einer Energieentwertung, die erfindungsgemäß nicht gewünscht ist und praktisch ausgeschlossen sein soll. Der Dampfdruck der flüssigen Phase kann dabei von dem Dampfdruck des Reaktionsgemisches abweichen, selbst wenn diese flüssige Phase die einzige flüssige Phase in diesem Reaktionsgemisch ist.

Im Folgenden wird davon ausgegangen, dass ein Reaktionsgemisch mit mehreren Komponenten vorliegt, aus dem durch chemische Reaktion das Produkt entstehen soll. Die Erfindung umfasst aber auch die chemische Umwandlung nur eines Edukts in das gewünschte Produkt. Beispielsweise kann aus Wasser Wasserstoff gewonnen werden. Die untenstehenden Ausführungen zum Reaktionsgemisch sollen auch sinngemäß gelten für einen chemischen Prozess mit nur einem Edukt oder Ausgangsstoff.

Es wurde erstmals festgestellt, dass nahe zum Kavitationsdruck ein sprunghafter Anstieg von Ausbeuten/Reaktionsgeschwindigkeiten bewirkt werden kann. Wesentlich ist, dass keine Kavitation stattfindet, bei der durch Druck-Volumen-Arbeit Energie in Form von Wärme im Gemisch freigesetzt wird. Je näher der Minimalwert des während der Reaktion zu regelnden Drucks an den Kavitationsdruck geführt wird, desto größer ist die Ausbeute des gewünschten Produkts. In einem Ausführungsbeispiel beträgt der Minimalwert lediglich 100,5 oder 100,3 %, dh. der Druck entspricht praktisch dem Kavitationsdruck, ohne Letztgenannten aber zu erreichen.

Es wird davon ausgegangen, dass in der Nähe des Kavitationsdrucks eine sprunghaft ansteigende, kinetische Kontrolle der Reaktion zugänglich wird: Bestimmte Reaktionspfade sind dann erheblich schneller und erlauben eine kinetisch bedingte, wirksame Steigerung der Ausbeuten an bestimmten, metastabilen Reaktionsprodukten. Sobald es zur Kavitation und der damit verbundenen Erwärmung der Mischung kommt, bricht dieser Effekt zusammen und es entstehen viel mehr Produkte, welche thermodynamisch gesehen die stabileren Verbindungen darstellen. Mithin erlaubt das vorgeschlagene Verfahren metastabiler, reaktiver Verbindungen, welche nach dem Stand der Technik bis jetzt nicht in den entsprechenden Ausbeuten bereitgestellt werden konnten.

Ein Druckunterschied zwischen dem Minimalwert und dem Kavitationsdruck kann kleiner als 20 mbar sein. In einem Ausführungsbeispiel liegt der Druckunterschied zwischen 4 und 15 mbar. Die kleinen Druckunterschiede machen eine exakte Führung oder Regelung des Drucks des Reaktionsgemisches erforderlich.

Erfindungsgemäß wird der Druck von einem Startwert auf den Minimalwert reduziert und danach auf einen Zielwert erhöht, der im Wesentlichen dem Startwert entsprechen kann. Beispielsweise kann der Startwert dem Umgebungsdruck von ca. 1000 mbar entsprechen. Der Startwert kann aber auch deutlich über dem Umgebungsdruck liegen, beispielsweise 2 bis 10 bar. Der Kavitationsdruck und damit der Minimalwert, der in unmittelbarer Nähe dazu liegt, hängen von der Temperatur des Reaktionsgemisches und den Anteilen der einzelnen Komponenten des Reaktionsgemisches ab. Darüber hinaus hängt der Kavitationsdruck noch von weiteren externen Faktoren ab.

Zur Veranschaulichung der in Anspruch 1 genannten Prozentzahlen wird von einem exemplarischen Ausführungsbeispiel ausgegangen, bei dem der Kavitationsdruck bei 350 mbar liegen soll. Ausgehend von einem Startwert von ca. 1 bar oder 1000 mbar wird der Druck für die chemische Reaktion bis auf 355 mbar reduziert und danach wieder erhöht. Der Minimalwert des Drucks entspricht dabei 355 mbar und liegt somit 5 mbar über dem Kavitationsdruck. Prozentual beträgt der Minimaldruck 101,43 % (355/350). Entspricht der Minimaldruck nur 352 mbar (in diesem Fall wird der Druck noch näher an den Kavitationsdruck herangeführt), dann würde sich ein Wert von 100,57 % (352/350) bezogen auf den Kavitationsdruck ergeben. Der Minimalwert von 100,57 % liegt dabei unter 101 %, d.h. im letztgenannten Beispiel wäre die Bedingung erfüllt, dass der Minimalwert höchstens 101 % des Kavitationsdrucks entspricht.

Die Zeit zur Reduzierung des Drucks vom Startwert bis zum Minimalwert ist erfindungsgemäß kleiner sein als die Zeit zur Erhöhung des Drucks vom Minimalwert auf den Zielwert. Auch kann vorgesehen sein, dass in einer ersten Phase der Druck reduziert, in einer zweiten Phase der Druck im Wesentlichen in der Nähe des Kavitationsdruck gehalten und in einer dritten Phase der Druck wieder erhöht wird bzw. das Reaktionsgemisch in geregelter Weise wieder entspannt wird. Eine solche Reaktionsführung kann durch eine absteigende Rampe, ein unteres Niveau und eine aufsteigende Rampe beschrieben werden. Eine andere Reaktionsführung sieht vor, dass die zweite Phase praktisch nicht vorhanden ist. Hier würde nach Erreichen des Minimaldrucks sofort mit der Entspannung des Systems begonnen, so dass die von der Zeit abhängige Drucckurve einen singulären Tiefpunkt aufweist.

Das Reaktionsgemisch wird erfindungsgemäß in Schwingung versetzt durch mechanische Vibrationen, durch Schallwellen oder durch elektromagnetische Wellen Die Frequenz der Impulse ist von dem Reaktionsgemisch und dem angestrebten Produkt abhängig. Die Amplitude der Impulse ist so zu bemessen, dass kein Kavitationseffekt derart auftritt, dass durch Bildung von Dampfblasen und deren plötzlichen Zerfall Energie in Form von Wärme freigesetzt wird. Die Form und Art der Impulse kann verschieden sein. Beispielsweise kann es sich um ein Sägezahnprofil, eine sinusförmige oder rechteckige Schwingung handeln, die von außen an das Reaktionsgemisch angelegt wird.

Die chemische Reaktion kann in einer Reaktionskammer herbeigeführt werden, wobei ein Volumen der Reaktionskammer variiert wird. Für die Variation des Volumens kann ein beweglicher Kolben eingesetzt werden. Dies führt dazu, dass beispielsweise bei einer Volumenvergrößerung der Druck in der gesamten Reaktionskammer reduziert wird. Durch die Kolbenbewegung wird keine oder praktisch keine kinetische Energie in das Reaktionsgemisch eingebracht, durch die es zu nennenswerten Strömungen oder Bewegungen in der Reaktionskammer kommt. Die Reaktion findet somit ohne (makroskopische) Bewegung des Reaktionsgemisches bzw. seiner Komponenten statt. Ein anderes Mittel zur Variation des Volumens stellt eine Membran dar, die die Reaktionskammer begrenzt und sich nach innen oder außen verformen kann. Auch kann der Druck in einer Reaktionskammer durch ein Zu- oder Abpumpen eines Teils der Reaktionsmischung variiert werden.

Eine andere Möglichkeit besteht darin, dass Reaktionsgemisch durch eine Anlage mit strömungsbeschleunigenden Mitteln wie beispielsweise eine Düse strömen zu lassen, um so den statischen Druck des Reaktionsgemisches in die Nähe des Kavitationsdrucks zu bringen. Aber auch hier bedarf es zwecks hoher Ausbeute des Produkts einer genauen Führung des (statischen) Drucks, da nach dem Passieren der Düse das Reaktionsgemisch nicht zu schnell an Geschwindigkeit verlieren darf, was mit einer zu schnellen Druckerhöhung verbunden wäre.

Eine weitere Möglichkeit besteht darin, das Reaktionsgemisch zum Teil in gefrorener Form (im Folgenden vereinfacht Eis genannt) in die Reaktionskammer zu geben und die Reaktionskammer nach vorzugsweise vollständiger Befüllung zu verschließen. Das Schmelzen des Eis führt in der Reaktionskammer zu einem Unterdruck, wobei das Schmelzen mit einem zusätzlichen Wärmeeintrag von außen beschleunigt werden kann. Es ist aber auch möglich, dass Eis bei Raumtemperatur (zum Beispiel 20°C) ohne gesonderte Wärmequelle schmelzen zu lassen. Über die Temperaturführung, die Menge an Eis im Verhältnis zur Gesamtmenge des Reaktionsgemisches kann der zeitliche Verlauf und die Höhe des Unterdrucks vorbestimmt werden. Dadurch kann Einfluss auf das zu erzeugende Produkt genommen werden. Diese Möglichkeit ist besonders geeignet zur Herstellung von Aminosäuren und Vitamin B.

Das Verfahren kann als diskontinuierlicher Prozess ausgebildet sein. Dabei wird eine begrenzte Menge des Reaktionsgemisches oder begrenzte Mengen der einzelnen Komponenten als Ganzes dem System zugeführt und ihm als Ganzes nach Abschluss des Verfahrens entnommen. Beispielsweise können bei dem Ausführungsbeispiel, bei dem die Bewegung des Kolben zu einer Volumenänderung der Reaktionskammer führt, durch den Kolben vor der chemischen Reaktion die Komponenten in die Reaktionskammer gezogen und durch den Kolben nach erfolgter Reaktion das Produkt aus der Reaktionskammer gedrückt werden. Dies kann dann für eine jede weitere Charge wiederholt werden. Auch ist es möglich, dass durch externe Fördermittel wie Pumpen die Mengen chargenweise dem System zugeführt und nach der Reaktion wieder entzogen werden.

Alternativ dazu kann das erfindungsgemäße Verfahren auch als kontinuierlicher Prozess ausgebildet sein. Dabei kann das Reaktionsgemisch kontinuierlich durch die oben erwähnte Anlage mit den strömungsbeschleunigenden Mitteln geleitet werden.

In einem Ausführungsbeispiel wird der Kavitationsdruck der Reaktionsmischung in zeitlichen Abständen immer wieder neu ermittelt. Beispielsweise können die Abstände kleiner als 30 Minuten sein, vorzugsweise kleiner als 10 min oder gar 30 Sekunden sein. Da erfindungsgemäß der Minimalwert des Drucks der Reaktionsmischung sehr nahe an den Kavitationsdruck herangeführt werden soll, diesen aber nicht unterschreiten soll, ist die genaue Kenntnis des Kavitationsdrucks wichtig. Es hat sich bei der Erfindung herausgestellt, dass bei ansonsten gleichen Zustandsgrößen des Reaktionsgemisches (Zusammensetzung der einzelnen Komponenten, Temperatur, Durchmischungsgrad) der Kavitationsdruck zeitlichen Schwankungen unterliegt. Daher ist es sehr hilfreich, den zu regelnden Minimalwert des Drucks nicht nur von den Zustandsgrößen des Reaktionsgemisches abhängig zu machen, sondern von dem zeitnah ermittelten Kavitationsdruck. Vorzugsweise erfolgt die Ermittlung des Kavitationsdrucks durch Messung. Beispielsweise kann jede x-te Charge (zum Beispiel 5-te, 10-te oder jede 100-te) beim Ausführungsbeispiel mit dem Kolben dafür verwendet werden, den Kavitationsdruck zu messen. Dabei wird der Drucks soweit reduziert und wieder leicht angehoben, bis die Kavitation durch Druckspitzen oder andere Phänomene erfasst werden kann. Der entsprechende Druckwert kann dann für die weiteren Chargen für die Ermittlung des Minimalwerts des Drucks verwendet werden.

In einem Ausführungsbeispiel wird der Kavitationsdruck kontinuierlich ermittelt, was insbesondere bei einem kontinuierlichen Verfahren vorteilhaft ist. Somit liegt immer ein aktueller Wert für den Druck des Reaktionsgemisches vor, bei dem es zu Dampfblasen kommt, deren Entstehung erfindungsgemäß nicht erwünscht ist.

Der Minimalwert des Drucks und/oder der zeitliche Verlauf des Drucks des Reaktionsgemisches kann in Abhängigkeit des ermittelten Kavitationsdrucks geregelt werden. Die Ermittlung des Kavitationsdrucks erfolgt zweckmäßig so, dass bei der eigentlichen chemischen Umwandlung der Kavitationsdruck nicht erreicht wird. In einem kontinuierlichen Prozess könnte daher die Ermittlung des Kavitationsdrucks innerhalb eines Bypasses stattfinden, der parallel zum Hauptpfad des Prozesses geschaltet ist und in dem über eine gesonderte Führung der Druck soweit reduziert wird, bis der Kavitationsdruck in der Tat erreicht und/oder unterschritten wird. Die daraus ableitbaren Ergebnisse können dann direkt bei der Prozessführung im Hauptpfad verwendet werden.

Um das oben bereits erwähnte Beispiel aufzugreifen, bei dem der Kavitationsdruck (in erster Messung) bei 350 mbar liegt, könnte somit der Minimalwert des Drucks auf 353 mbar geregelt werden, wobei dann eine absolute Differenz von 3 mbar gegeben wäre. Die Regelung des Minimalwerts kann beispielsweise durch die Ansteuerung von Ventilen, von Kolben etc. erfolgen. Ergibt eine neue Messung, dass der Kavitationsdruck aufgrund diverser Einflussgrößen, die im Einzelnen nicht alle bekannt sein müssen, nun auf 341 mbar abgefallen ist, kann der Minimalwert entsprechend nachgeführt und beispielsweise ebenfalls um 3 mbar abgesenkt werden. Wird hingegen ein Kavitationsdruck von 355 mbar ermittelt, kann der Minimaldruck auf mindestens 356 mbar oder, um weiterhin eine absolute Differenz von 3 mbar sicher zu stellen, auf 358 mbar eingestellt werden.

Begleitend zur Reaktion können ein elektrochemisches Potential und/oder ein elektrischer Strom/Spannung in der Reaktionsmischung angelegt sein. Insbesondere Moleküle mit Dipolmoment und/oder dauerhafter Ladung können so ausgerichtet, ggf. in Ketten oder Barrieren angeordnet und sterisch vorteilhaft für eine Reaktion geöffnet und/oder flächig bereitgestellt werden.

In einem Ausführungsbeispiel erfolgt die Druckregelung begleitend zu mindestens einer, bevorzugt mehrerer aufeinanderfolgender, Molekül- und/oder Atom-Übertragung zwischen Komponenten im Reaktionsgemisch.

Bevorzugt ist das Verfahren dadurch gekennzeichnet, dass die Reaktionsmischung mindestens eine Komponente aufweist, welche ausgewählt ist aus der Gruppe umfassend Feststoff, nanoskaliger Feststoff, nanoskaliges Silizium, Metallhydroxid, Metallverbindung, Halbmetallverbindung, Eis, keramikgeträgerter Katalysator, nanoskaliger Katalysator, Kohlendioxid, Ammoniak, Schwefelwasserstoff, Wasser, Schwefelkohlenstoff, Kohlenmonoxid, Wasserstoff, Sauerstoff, Stickstoff, Generator-Gas, Helium, Argon, Neon, Schweißgas, Moleküle und/oder Verbindungen mit Dipolmoment, ionische Verbindungen, Salze.

Die Reaktionsmischung kann als flüssige Phase mindestens eine flüssige Komponente aufweisen, welche ausgewählt ist aus der Gruppe umfassend Wasser, Kohlendioxid, Kohlenwasserstoff, langkettiger Kohlenwasserstoff, Polyol, Fett, Fettsäure, Eiweiß, Zucker, Zucker, Ester, Aminosäure, Vitamin, Moleküle und/oder Verbindungen mit Dipolmoment, ionische Verbindungen, Salze.

Das Produkt kann mindestens ein Produkt ausgewählt sein aus der Gruppe bestehend aus Kohlenwasserstoff, Aminosäure, Eiweiß, Peptid, Glycerin, Fettsäure, Fett, Zucker, Alkohol, Vitamin, Ammoniak, nanoskalige Feststoffe, nanoskaliges Silizium, Leichtbenzin, Kohlenwasserstoff mit gekürzter Kettenlänge, hydrierter Kohlenwasserstoff, Moleküle und/oder Verbindungen mit Dipolmoment, ionische Verbindungen, Salze.

Eine mögliche Vorrichtung zur Durchführung des hier beschriebenen Verfahrens zur Regelung der chemischen Reaktion weist eine Reaktionskammer und einen Antrieb zur Drehung der Reaktionskammer um eine Drehachse auf, um den Druck in der Reaktionskammer zu reduzieren. Die Druckreduzierung ist dabei auf die Zentrifugalkraft zurückzuführen, die auf das in der Reaktionskammer befindliche Edukt bzw. auf das in der Reaktionskammer befindliche Reaktionsgemisch wirkt. Die Vorrichtung muss so beschaffen sein, dass die Zentrifugalkraft zu der gewünschten Druckreduktion in der Kammer führt, beispielsweise durch wenigstens einen Auslass, durch den das Produkt der chemischen und ggf. das noch verbleibende Reaktionsgemisch entweichen kann. Es sind Mittel vorgesehen, durch die eine Befüllung der rotierenden

Reaktionskammer mit dem Reaktionsgemisch in einer zur Drehachse parallelen Richtung und/oder in einer von der Drehachse radial nach außen weisenden Richtung möglich ist. Somit kann die Reaktionskammer in Rotation versetzt werden und muss zur Befüllung nicht in Stillstand gebracht werden. Vorzugsweise ist eine Befüllung möglich, ohne dass dabei die Drehzahl (Umdrehungen pro Zeiteinheit) der Reaktionskammer geändert werden muss. Die Befüllung des Reaktionsgemisches verläuft dabei in einer Richtung, die der Richtung der Zentrifugalkraft nicht entgegen gesetzt ist. Auch kann - zumindest in bevorzugten Ausführungen - vermieden werden, dass das Befüllen der Reaktionskammer durch den Fluss des Produkts aus der Reaktionskammer behindert wird.

Die Mittel zur Befüllung können wenigstens eine Ventileinrichtung aufweisen, wobei bei rotierender Reaktionskammer in einer geschlossenen Stellung der Ventileinrichtung der Druck in der Reaktionskammer reduziert werden kann. Das heißt, in geschlossener Stellung der Ventileinrichtung und bei entsprechend geöffnetem Auslass werden durch die Rotation der Reaktionskammer die dort befindlichen Stoffe aus der Reaktionskammer herausgeschleudert, wodurch ein Unterdruck in der Reaktionskammer entsteht. Dabei findet dann die oben beschriebene chemische Reaktion oberhalb des Kavitätsdrucks statt. Durch ein Öffnen der Ventileinrichtung und der damit einhergehenden Befüllung steigt der Druck in der Reaktionskammer wieder an.

Die Mittel zur Befüllung der Reaktionskammer können mehrere Ventileinrichtungen umfassen. Beispielsweise kann ein Edukt parallel zur Drehachse und ein anderes Edukt radial von innen in die Reaktionskammer durch voneinander getrennte Ventileinrichtungen geführt werden. Auch ist es möglich, dass das Reaktionsgemisch bereits außerhalb der Reaktionskammer aufbereitet wird und durch verschiedene Ventileinrichtungen in die Reaktionskammer gelangt.

Die Ventileinrichtung kann geregelt sein, um den Druck in der Reaktionskammer in jeder Zeitphase der chemischen Reaktion genau einzustellen. Beispielsweise kann bei einer gegebenen Drehzahl für einen bestimmten Zeitraum die Ventileinrichtung geöffnet sein, um die Reaktionskammer zu befüllen. Hier können der Fluss durch die Ventileinrichtung und damit der Befüllungsgrad der Reaktionskammer genau eingestellt werden. Der Befüllung folgt dann die Entleerung der Reaktionskammer durch ein vorzugsweise geregeltes Öffnen des Auslasses der Reaktionskammer. Dabei kann auch eine Überschneidung vorgesehen sein, bei der der Auslass (schon) geöffnet und die Ventileinrichtung (noch) nicht geschlossen ist.

Grundsätzlich lässt sich die Vorrichtung auch so regeln, dass innerhalb der Reaktionskammer der Kavitationsdruck unterschritten wird, es also innerhalb der Reaktionskammer zur Bildung von Dampfblasen und deren Zerfall kommt. Die Vorrichtung ist daher auf die Durchführung des erfindungsgemäßen Verfahrens nicht beschränkt. Beispielsweise kann durch Vorgabe anderer Sollwerte in der Reaktionskammer gezielt eine Kavitation eingestellt werden, um beispielsweise für eine chemische Reaktion eine bestimmte Wärmemenge bereitzustellen. Hier kann durch die Regelung der Ventileinrichtung im Zusammenspiel mit der Regelung des Auslasses das Maß der Kavitation eingestellt werden.

Vorzugsweise sind Mittel vorgesehen, durch die eine vollständige Abführung von etwaigen gasförmigen Komponenten aus der Reaktionskammer erfolgt, bevor diese wieder neu gefüllt wird. In der Reaktionskammer verbleibendes Gas führt zu schlechten Wirkungsgraden der Vorrichtung. Die Mittel zur vollständigen Abführung der gasförmigen Komponenten können beispielsweise eine entsprechende Steuerung der Ventileinrichtung umfassen.

Die geschlossene Stellung und/oder die geöffnete Stellung der Ventileinrichtung kann von einem Drehwinkel der Reaktionskammer abhängen. Beispielsweise kann für eine Umdrehung der Reaktionskammer ein erster Drehwinkelbereich vorgesehen sein, in dem die Reaktionskammer befüllt wird (geöffnete Stellung der Ventileinrichtung). In einem zweiten Drehwinkelbereich ist dann - bei geschlossener Stellung der Ventileinrichtung - der Auslass geöffnet, so dass es in der Reaktionskammer zur gewünschten chemischen Reaktion bei gleichzeitigem Austritt des Produkts kommen kann. Die beiden Drehwinkelbereiche können sich zu 360 Grad ergänzen. Es ist aber auch möglich, dass sie sich zu 360/n (natürliche Zahl n= 2, 3 etc.) ergänzen. Auch können mehr als zwei Drehwinkelbereiche für jeweils einen sich wiederholenden Reaktionszyklus vorgesehen sein. So ist es denkbar, dass ein dritter Drehwinkelbereich zwischen dem ersten und dem zweiten Drehwinkelbereich vorgesehen ist, in dem übergangsweise der Auslass und die Ventileinrichtung gleichzeitig geöffnet sind.

In einem Ausführungsbeispiel schneidet die Drehachse die Reaktionskammer, wobei hier die Reaktionskammer zur Drehachse rotationssymmetrisch ausgebildet sein kann. Die Reaktionskammer kann auch mit einem gewissen radialen Abstand zur Drehachse angeordnet sein.

Die Reaktionskammer kann sich entlang einer Längsachse erstrecken, die senkrecht zur Drehachse verläuft. Die Reaktionskammer kann dabei von einem runden Rohr begrenzt sein, so dass sich ein kreisrunder Querschnitt senkrecht zur Längsachse ergibt. Die Reaktionskammer kann alternativ einen mehreckigen oder ovalen Querschnitt aufweisen. Entlang der Längsachse kann der Querschnitt sich hinsichtlich seine Größe und/oder seiner grundsätzlichen Form ändern.

In einem Ausführungsbeispiel läuft an einem radial äußeren Ende die Reaktionskammer kegelstumpfförmig aus, so dass sich dort die Querschnittsfläche verkleinert. Am radial äußeren Ende kann auch ein Trichter vorgesehen sein, sodass die Querschnittsfläche nach außen hin zunimmt. Die Gestaltung der Reaktionskammer hat Einfluss auf die dortigen Strömungsverhältnisse und somit auf den Druckverlauf in der Reaktionskammer.

Anhand der in der Zeichnung dargestellten Ausführungsbeispiele soll die Erfindung näher erläutert werden. Es zeigen:
- Figur 1: schematisch eine Vorrichtung zur Durchführung des erfindungsgemäßen Verfahrens; und
- Figur 2: einen Verlauf der Kraft, die an einem Kolben zur Volumenänderung einer Reaktionskammer anliegt.
- Figur 3: schematisch eine Vorrichtung zur kontinuierlichen Durchführung des erfindungsgemäßen Verfahrens;
- Figur 4: schematisch ein erstes Ausführungsbeispiel für eine Vorrichtung zur Durchführung des erfindungsgemäßen Verfahrens;
- Figur 5: schematisch ein zweites Ausführungsbeispiel für die Vorrichtung;
- Figur 6: schematisch ein drittes Ausführungsbeispiel für die Vorrichtung;
- Figur 7: schematisch ein viertes Ausführungsbeispiel von oben; und
- Figur 8: schematisch eine Modifikation der Vorrichtung gemäß Figur 1.

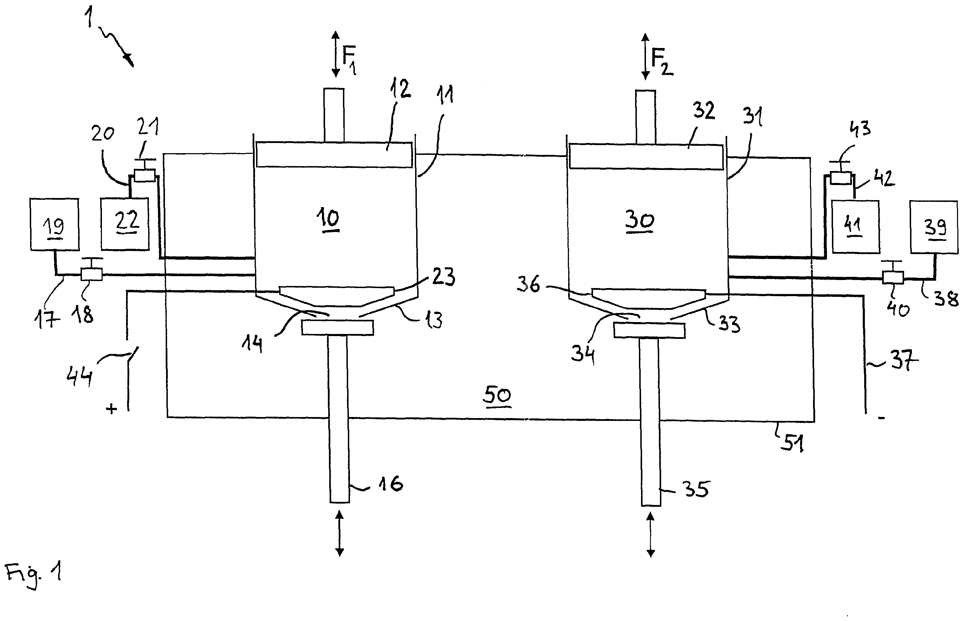

Figur 1 zeigt schematisch eine Vorrichtung zur Durchführung des erfindungsgemäßen Verfahrens. Die Vorrichtung ist in ihrer Gesamtheit mit 1 bezeichnet. Die Vorrichtung 1 umfasst eine erste Reaktionskammer 10, die durch einen Zylinder 11 und einen entlang der Mittelachse des Zylinders 11 verfahrbaren Kolben 12 begrenzt ist. An einem stirnseitigen Ende 13 weist der Zylinder 11 eine Öffnung 14 auf, die sich durch ein erstes Hauptventil 16 schließen lässt.

Über eine Zuleitung 17, welche über ein Ventil 18 sich öffnen und schließen lässt, kann die erste Reaktionskammer 10 mit einer ersten Komponente eines Reaktionsgemisches befüllt werden. Die erste Komponente befindet sich dabei in einem Behälter 19. Diese erste Komponente soll hier Pflanzenöl sein.

Eine weitere Zuleitung 20, welche sich durch das Ventil 21 öffnen und schließen lässt, verbindet die erste Reaktionskammer 10 mit einem weiteren Behälter 22. Der Behälter 22 soll zur Aufnahme eines Produkts dienen, dass durch eine chemische Reaktion in der ersten Reaktionskammer 10 entsteht.

In der Nähe des stirnseitigen Endes 13 des Zylinders 11 ist in der Reaktionskammer 10 eine Anode 23 angeordnet. Die Anode 23 dient dazu, an das in der ersten Reaktionskammer 10 befindliche Reaktionsgemisch ein elektrisches Potenzial anzulegen.

Die Vorrichtung 1 weist des Weiteren eine zweite Reaktionskammer 30 auf, die im Wesentlichen gleich aufgebaut ist wie die erste Reaktionskammer 10. Auch hier wird die Reaktionskammer 30 durch eine zylinderförmige Kammerwand bzw. Zylinder 31 und einen verfahrbaren Kolben 32 begrenzt. An einem stirnseitigen Ende 33 der zylinderförmigen Wandlung 31 bzw. des Zylinders 31 ist eine Öffnung 34 vorgesehen, die sich durch ein zweites Hauptventil 35 schließen lässt. In der zweiten Reaktionskammer 30 ist eine Kathode 36 angeordnet, die über einen Stromkreis 37 und einer hier nicht dargestellten Spannungsquelle mit der Anode 23 in der ersten Reaktionskammer 10 verbunden ist.

Zur Befüllung der zweiten Reaktionskammer 30 ist eine Zuleitung 38 vorgesehen, die einen Behälter 39 mit der zweiten Reaktionskammer 30 verbindet. Durch ein Ventil 40 lässt sich die Zuleitung 38 öffnen und schließen. Ein weiterer Behälter 41 ist vorgesehen, der zur Aufnahme eines Produkts dient, dass durch eine Reaktion in der zweiten Reaktionskammer 30 entsteht. Der Behälter 41 ist über eine Zuleitung 42, die sich über ein Ventil 43 öffnen und schließen lässt, mit der zweiten Reaktionskammer 30 verbunden.

Wenn das erste Hauptventil 16 und das zweite Hauptventil 35 geöffnet ist, sind die erste Reaktionskammer 10 und die zweite Reaktionskammer 30 über eine Verbindungskammer 50 fluidtechnisch miteinander verbunden. In der Verbindungskammer 50, die durch einen abgeschlossenen Behälter 51 begrenzt sein soll, befindet sich in einem Ausführungsbeispiel der Erfindung Wasser, dessen Leitfähigkeit durch einen Zusatz wie beispielsweise Salz erhöht werden kann. Bei geöffneten Hauptventilen 16, 35 besteht somit ein geschlossener Stromkreis zwischen der Anode 23 und der Kathode 36 aufgrund dem in der Verbindungskammer 50 befindliche leitfähige Wasser.

Zum Befüllen der ersten Reaktionskammer 10 wird das Ventil 18 geöffnet, sodass das Pflanzenöl, dass hier die erste Komponente des Reaktionsgemisches darstellen soll, aus dem Behälter 19 durch die Zuleitung 17 in die Reaktionskammer 10 fließen kann. Dies kann durch eine hier nicht dargestellte Pumpe und/oder durch den Kolben 12 erfolgen, der von einem unteren Totpunkt beginnend das Pflanzenöl durch eine in der Darstellung der Figur 1 nach oben gerichtete Bewegung in die erste Reaktionskammer 10 saugt. Über die Stellung des ersten Hauptventils 16 lässt sich die Menge an Wasser einstellen, die von der Verbindungskammer 50 in die erste Reaktionskammer 10 fließt, wenn der Kolben 12 sich nach oben bewegt und in der Reaktionskammer einen Unterdruck erzeugt. Wasser bildet somit in diesem Ausführungsbeispiel eine zweite Komponente für das Reaktionsgemisch, aus dem in der ersten Reaktionskammer 10 ein gewünschtes Produkt entstehen soll.

Damit die Verbindungskammer 50 mit Wasser vorzugsweise vollständig gefüllt bleibt, ist das Ventil 40 geöffnet, sodass durch die Zuleitung 38 Wasser, welches sich in dem Behälter 39 befinden soll, über die zweite Reaktionskammer 30 in die Verbindungkammer 50 nachschließen kann. Es ist auch möglich, dass eine hier nicht dargestellte Pumpe Wasser aus dem Behälter 39 durch die Zuleitung 38 in die zweite Reaktionskammer 30 drückt, sodass dieses Wasser über das geöffnete zweite Hauptventil 35 in die Verbindungskammer 50 gelangt.

Nach dem Befüllen der beiden Reaktionskammer 10, 30 befindet sich somit in der ersten Reaktionskammer 10 ein Gemisch, welches Pflanzenöl und Wasser umfasst. In der zweiten Reaktionskammer befindet sich Wasser. Sowohl die Verbindungskammer 50 als auch die beiden Reaktionskammer 10, 30 sollen zweckmäßig vollständig mit der Reaktionsmischung bzw. dem Wasser befüllt sein. Die Hauptventile 16, 35 sind weiterhin geöffnet, damit der Stromkreis zwischen der Anode 23 und der Kathode 36 über das in der Verbindungskammer befindliche Wasser geschlossen ist. Das Volumen der ersten Reaktionskammer 10 und das Volumen der zweiten Reaktionskammer 30 wird nun dadurch erhöht, dass die Kolben 12, 32 in der Darstellung der Figur 1 nach oben bewegt werden. Dafür wird jeweils eine Kraft F benötigt, wobei die an dem Kolben 12 angreifende Kraft F₁ genauso groß sein soll wie die an dem Kolben 32 angreifende Kraft F₂. Bedingt durch die Gleichheit der Kräfte F₁, F₂ kommt es praktisch zu keinem Austausch von Flüssigkeiten zwischen den Kammern 10, 30, 50, wenn die Kolben 12, 32 nach oben gezogen werden.

Durch die Volumenvergrößerung in der ersten Reaktionskammer 10 sinkt der Druck für das in der Reaktionskammer 10 befindliche Reaktionsgemisch. Der Druck wird über die geregelte Kraft F₁ bzw. F₂ so weit reduziert, dass ein Minimalwert des Drucks in der Reaktionskammer 10 nur wenige Millibar (beispielsweise 1 bis 8 mbar) über dem Kavitationsdruck des Reaktionsgemisches liegt. D.h., der Druck in der ersten Reaktionskammer 10 wird so weit reduziert, dass praktisch der Kavitationsdruck erreicht wird. Wichtig ist aber, dass der Minimalwert (Minimaldruck) nicht ganz den Kavitationsdruck erreicht, sodass eine Entstehung von Dampfblasen im Reaktionsgemisch und deren anschließenden Zerfall verhindert werden kann. Nach Erreichen des Minimalwerts wird der Kolben wieder zurückgefahren, so dass der Unterdruck in der Reaktionskammer 10 abgebaut wird.

In unmittelbarer Nähe zum Zeitpunkt, in dem der Minimalwert des Drucks in der ersten Reaktionskammer 10 erreicht wird, wird das erste Hauptventil 16 geschlossen. Das Schließen des ersten Hauptventils 16 kann dabei mit dem Zeitpunkt des Erreichens des Minimalwerts zusammenfallen oder davon um wenige Millisekunden (beispielsweise 0 bis 30 ms) abweichen. Durch das Schließen des ersten Hauptventils 16 wird auch der Stromkreis zwischen Anode 23 und Kathode 36 unterbrochen. Dies bedeutet, dass mit Erreichen des Minimaldrucks in der ersten Reaktionskammer 10 die Spannung zwischen Anode 23 und Kathode 36 zusammenbricht. Es ist auch möglich, über einen Schalter 44 den Stromkreis zwischen Anode 23 und Kathode 36 zu öffnen.

Gleichzeitig zur Druckreduzierung in der ersten Reaktionskammer 10 wird auch im gleichen Umfang der Druck in der zweiten Reaktionskammer 30 reduziert. Auch hier wird ein Minimaldruck erreicht, der bedingt durch die geöffneten Hauptventile 16, 35 dem Minimaldruck in der ersten Reaktionskammer 10 entspricht. Vorzugsweise findet auch in der zweiten Reaktionskammer 30 keine Kavitation statt, wobei darauf hingewiesen wird, dass der Kavitationsdruck in der zweiten Reaktionskammer 30 nicht exakt dem Kavitationsdruck in der ersten Reaktionskammer 10 entsprechen muss. Dies liegt darin begründet, dass der Kavitationsdruck auch von der stofflichen Zusammensetzung abhängt (einerseits Reaktionsgemisch umfassend Wasser und Pflanzenöl, andererseits Wasser) unterschiedlich ist.

Nach erfolgter chemischer Reaktion in der ersten Reaktionskammer 10 befindet sich nun darin das Produkt, das gegenüber Pflanzenöl leichter brennbar ist. Durch den Kolben 12 und bei geschlossenem ersten Hauptventil 16 lässt sich die erste Reaktionskammer 10 vollständig entleeren, wobei dann das Produkt in den Behälter 22 gedrückt wird. Das dem Behälter 22 vorgeschaltete Ventil 21 ist dabei geöffnet, während das Ventil 18, durch das sich der Behälter 19 mit dem darin befindlichen Wasser von der Reaktionskammer 10 trennen lässt, geschlossen ist. In ähnlicher Weise wird auch die zweite Reaktionskammer 30 geleert, wobei das nun darin befindliche Wasser mit Sauerstoff angereichert ist und in den Behälter 41 abgefüllt wird. Das dem Behälter 41 vorgeschaltete Ventil 43 ist dabei geöffnet, während das Ventil 40 geschlossen ist. Dem Entladevorgang kann sich nun wieder ein Befüllen der Reaktionskammer 10, 30 anschließen, wie es oben beschrieben ist.

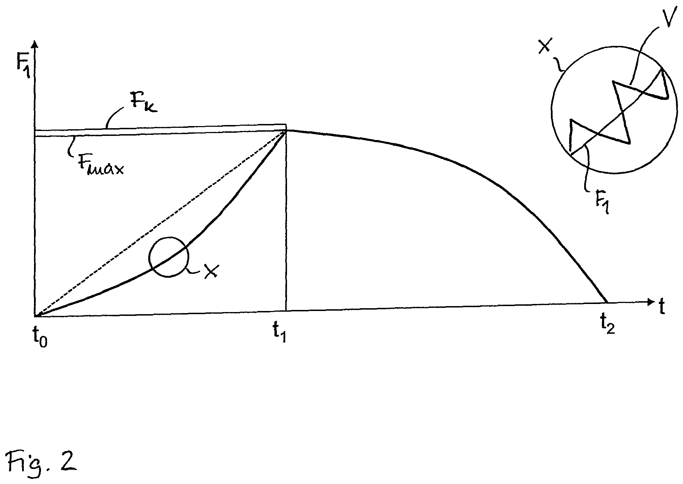

Figur 2 zeigt den zeitlichen Verlauf der Kraft F₁, die an dem Kolben 12 der ersten Reaktionskammer 10 anliegt. Zum Zeitpunkt to soll die Kraft F₁ gleich 0 sein. Dann wird an dem Kolben 12 gezogen, um das Volumen der ersten Reaktionskammer 10 zu erhöhen. Bis zum Zeitpunkt t₁ steigt die Kraft F₁ an, was zu einem immer kleiner werdenden Unterdruck in der ersten Reaktionskammer 10 führt. Im Zeitpunkt t₁ wird eine maximale Kraft Fₘₐₓ erreicht, die mit einem minimalen Druck in der Reaktionskammer 10 verbunden ist. Würde die Kraft F₁ über den maximalen Wert Fₘₐₓ weiter gesteigert werden, würde in der Reaktionskammer 10 der Unterdruck so groß, dass der Kavitationsdruck erreicht bzw. unterschritten wird. Dieser Kavitationsdruck in der Reaktionskammer 10 würde mit einer entsprechenden Kraft F_{K} am Kolben 12 verbunden sein.

Nachdem der Maximalwert Fₘₐₓ für die an dem Kolben 12 angreifende Kraft F₁ erreicht ist bzw. wenn der Minimaldruck in der Reaktionskammer 10 erreicht ist, wird in dem Zeitraum zwischen t₁ und t₂ der Kolben 12 wieder langsam zurück gefahren. Das Reaktionsgemisch in der Reaktionskammer 10 bzw. das entstandene Produkt in der Reaktionskammer 10 wird durch den zurückfahrenden Kolben 12 wieder entspannt, bis es das Druckniveau erreicht, das zum Zeitpunkt to Reaktionskammer 10 herrscht.

Der Verlauf der Kraft F₁ im Vergleich zu der gestrichelten Geraden zeigt, dass die Kraft F₁ exponentiell ansteigt bzw. dass die zweite Ableitung des Kurvenstücks zwischen to und t₁ größer gleich 0 ist. Die zweite Ableitung des Kurvenstücks zwischen t₁ und t₂ hingegen ist negativ. Auch sei darauf hingewiesen, dass der Zeitraum zwischen t₁ und t₂ größer ist als der Zeitraum zwischen to und t₁. Dies bedeutet, dass die Entspannung nach Erreichen des Minimaldrucks mehr Zeit in Anspruch nimmt als die Phase davor.

Für den Verlauf der Kraft F₁ ist ein runder Ausschnitt X in Figur 2 größer dargestellt. Im vergrößerten Ausschnitt X ist zum einen die Kraft F₁ und ein Schwingungs- oder Vibrationsverlauf V zu erkennen. Zusätzlich zur Druckreduzierung kann das Reaktionsgemisch bzw. das Edukt durch geeignete Mittel in Schwingung versetzt werden. Dies kann beispielsweise durch mechanische Vibrationen, durch Schallwellen oder durch elektromagnetische Wellen erfolgen. Zwischen den Zeitpunkten to und t₁ können 2 bis 1000 Impulse in das System eingebracht werden. Die Frequenz der Impulse ist von dem Material bzw. der Materialzusammensetzung und dem angestrebten Produkt abhängig.

Insbesondere, wenn die Zeitdifferenz zwischen t₁ und t₀ klein ist, kann auf das Vorsehen des gesonderten Schwingungs- oder Vibrationsverlaufs V verzichtet werden

Die Amplitude ist so zu bemessen, dass kein Kavitationseffekt derart auftritt, dass durch Bildung von Dampfblasen und deren plötzlichen Zerfall Energie in Form von Wärme freigesetzt wird. Die Form und Art der Impulse kann verschieden sein. Beispielsweise kann es sich um ein Sägezahnprofil (wie in Figur 2 schematisch dargestellt) handeln. Die Impulse können beliebig anders ausgebildet sein, beispielsweise sinusförmig oder rechteckig.

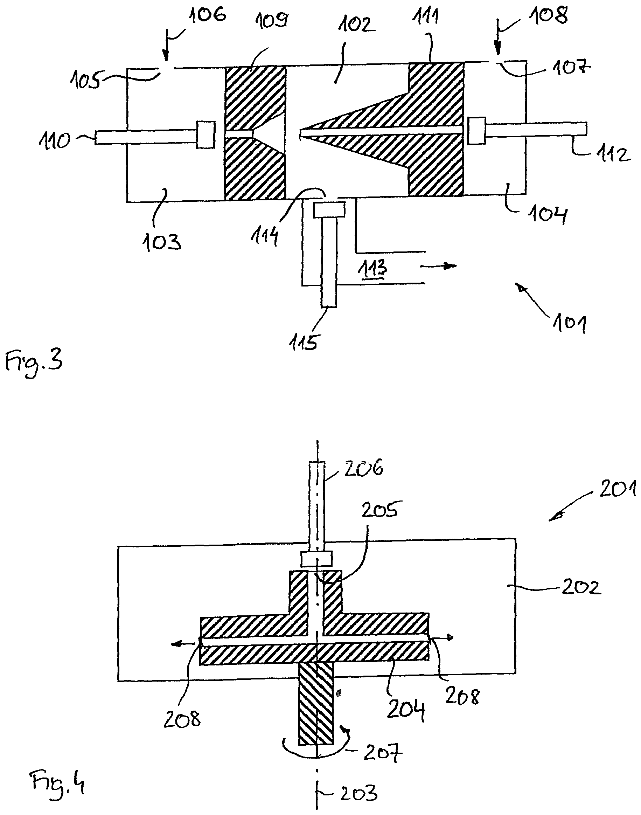

Figur 3 zeigt schematisch eine Vorrichtung 101 zur kontinuierlichen Durchführung des erfindungsgemäßen Verfahrens. Die Vorrichtung 101 umfasst eine Reaktionskammer 102 und eine erste Vorkammer 103 und eine zweite Vorkammer 104. Die erste Vorkammer 103 weist einer Öffnung 105 auf, durch die eine unter Druck gesetzte Komponente des Reaktionsgemisches oder ein Teilstrom des Reaktionsgemisches in die erste Vorkammer 103 gelangt. Der entsprechende Durchfluss durch die Öffnung 105 ist durch den Pfeil 106 gekennzeichnet. Auch die zweite Vorkammer 104 weist eine Öffnung 107 auf, durch die, dargestellt durch den Pfeil 108, eine weitere Komponente des Reaktionsgemisches bzw. der anderer Teilstrom des Reaktionsgemisches in die zweite Vorkammer 104 gelangt.

Über eine erste Düsenvorrichtung 109 gelangt das in der ersten Vorkammer103 befindliche Medium in die Reaktionskammer 102. Über ein Ventil 110 lässt sich der Strömungswiderstand zwischen der ersten Vorkammer103 und der Reaktionskammer 102 genau einstellen. Über eine zweite Düsenvorrichtung 111 gelangt das Reaktionsgemisch bzw. die Komponente der zweiten Vorkammer 104 in die Reaktionskammer 102. Auch hier ist ein Ventil 112 vorgesehen, durch den der Strömungswiderstand bzw. der Durchfluss von der zweiten Vorkammer104 in die Reaktionskammer 102 eingestellt werden kann.

Über einen Unterdruck, der in einem Abfluss 113 anliegt, wird der Reaktionskammer 102 das durch die chemische Reaktion entstandene Produkt entnommen. Der Abfluss 113 ist dabei über eine Öffnung 114 mit der Reaktionskammer 102 verbunden, wobei ein Ventil 115 diese Öffnung schließen und öffnen kann und dazu ausgelegt ist, den Strömungswiderstand zwischen Reaktionskammer 102 und Abfluss 113 einzustellen.

Die einzelnen Ventile 110, 112 und 115 werden so geregelt, dass sich in der Reaktionskammer 102 ein Druck einstellt, der in unmittelbarer Nähe des Kavitationsdrucks liegt, diesen aber nicht nach unten unterschreitet.

Figur 4 zeigt schematisch ein erstes Ausführungsbeispiel für eine Vorrichtung 201 mit einer mit dem Reaktionsgemisch gefüllten Kammer 202, in der sich ein um eine Drehachse 203 drehbarer Kreisel 204 befindet. Über ein Ventil 206 lässt sich eine obere Öffnung 205 des Kreisels 204 schließen. Auch ist es über das Ventil 206 möglich, den Durchfluss bzw. den Strömungswiderstand durch die obere Öffnung 205 genau einzustellen. Wird nun der Kreisel 204 gemäß dem Pfeil 207 um die Drehachse 203 über einen nicht dargestellten Antrieb in Rotation versetzt, wird das im Kreiselinnenraum befindliche Medium durch die Fliehkraft durch die seitlichen oder äußeren Öffnungen 208 zurück in die Kammer 102 geschleudert. Dadurch entsteht im Innenraum des Kreisels ein Unterdruck, der mit Hilfe des Ventils 206 und der Drehzahl des Kreises 204 so eingestellt werden kann, das dieser innerhalb des Innenraums zu der gewünschten chemischen Reaktion führt, ohne dass dabei der Kavitationsdruck unterschritten wird.

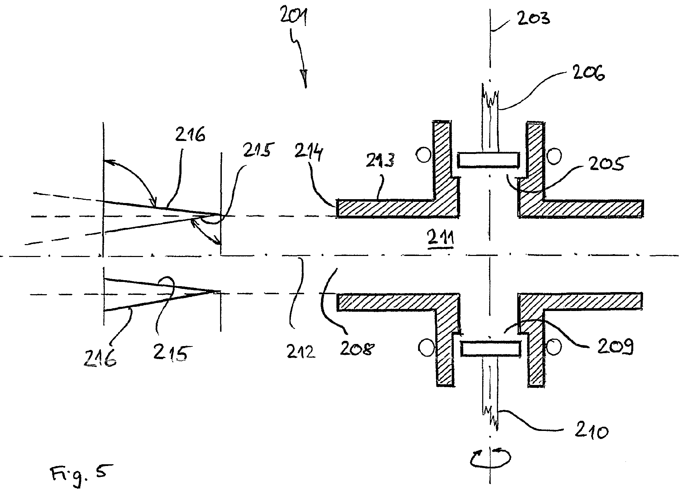

Figur 5 zeigt ein weiteres Ausführungsbeispiel für die Vorrichtung 201. Neben der oberen Öffnung 205 ist eine weitere oder untere Öffnung 209 vorgesehen, die sich durch ein Ventil 210 schließen lässt. Die Ventile 206, 210 stehen sich gegenüber und lassen sich entlang der Drehachse 203 verschieben.

Eine Reaktionskammer 211 erstreckt sich entlang einer Längsachse 212 senkrecht zur Drehachse 203. Die Reaktionskammer wird durch ein Rohr 213 mit kreisrundem Querschnitt begrenzt. An einem radial äußeren Rohrende 214 kann das Rohr 213 sich verjüngen und kegelförmig zusammenlaufen, so dass die äußere Öffnung 208 des Rohrs 213 eine kleinere Querschnittsfläche aufweist als das Rohr 213 in dem Bereich, in dem die Reaktionskammer 211 von der Drehachse 203 geschnitten wird. Das kegelförmige Zusammenlaufen des Rohrs 213 soll durch die Linien 215 verdeutlicht werden. Alternativ kann sich das Rohrende 214 trichterförmig aufweiten, was durch die Linien 216 dargestellt ist.

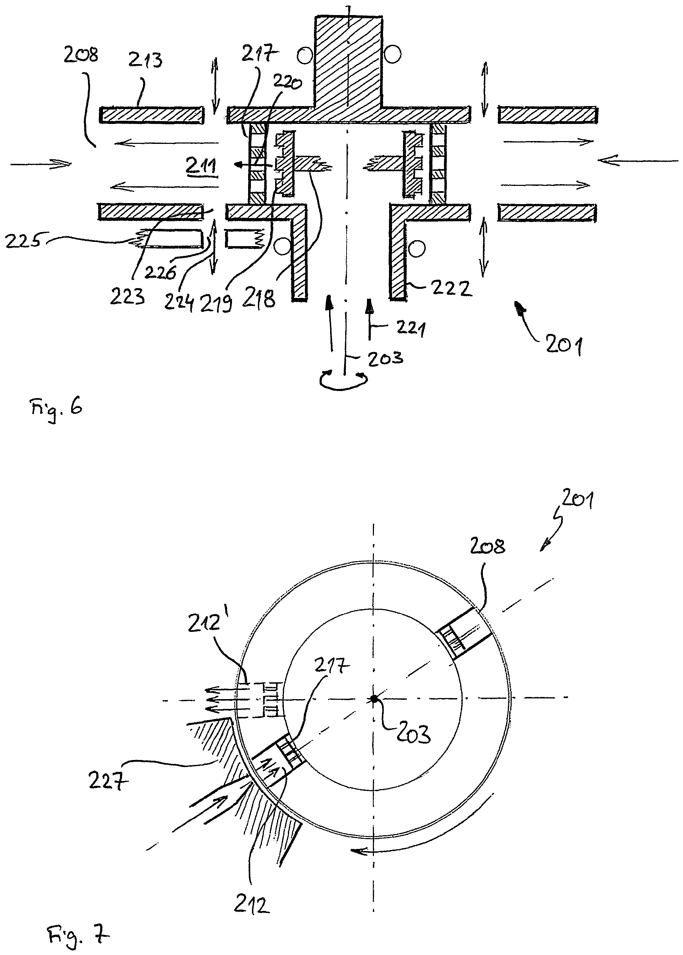

Figur 6 zeigt ein Ausführungsbeispiel für die Vorrichtung 201, bei dem die Reaktionskammer 212 nicht von der Drehachse 203 geschnitten wird. Auch hier bildet ein Rohr 213 die Wandung der Reaktionskammer 212, wobei ein Sieb 217 eine radiale Innenbegrenzung darstellt. Das Sieb 217 lässt sich durch ein Ventil 218 verschließen, wobei sich einzelne Siebnadeln 219 in die Sieböffnungen des Siebes 217 bewegen lassen. Ein Edukt oder ein Teil des Reaktionsgemisches der chemischen Reaktion lässt sich somit in einer von der Drehachse 203 radial nach außen weisenden Richtung 220 in die Reaktionskammer 212 füllen. Die Pfeile 221 deuten eine Möglichkeit an, wie das Reaktionsgemisch bis zum Ventil 218 bzw. zum Sieb 217 gelangen kann, nämlich durch ein zur Drehachse 203 koaxial angeordnetes Befüllrohr 222.

Zusätzlich lässt sich die Reaktionskammer 212 durch eine Öffnung 223 im Rohr 213 befüllen, wobei hier die Befüllung in einer Richtung parallel zur Drehachse 203 stattfindet (siehe Doppelpfeil 224). Durch eine feststehende Lochscheibe 225, die mit wenigstens einem (Lang-)Loch 226 versehen ist, ist ein Öffnen und Schließen der Öffnung 223 möglich. Wenn das Langloch 226 und das Loch 223 in Überdeckung sind, kann entsprechend des Pfeils 226 das Reaktionsgemisch in die Reaktionskammer 212 gelangen. Ist eine Überdeckung nicht gegeben, weil die Öffnugen/Löcher 223, 226 zueinander verdreht sind, ist die Öffnung 223 hingegen verschlossen.

Figur 7 zeigt ein ebenfalls mit 201 bezeichnetes Ausführungsbeispiel, bei dem die Reaktionskammer 212 auch radial von außen befüllt wird. Dazu läuft bei Drehung um die Drehachse 203 die äußere Öffnung 208 an einem Verschlusssegment 227 vorbei, welches eine Einspritzdüse 228 aufweist. Die Einspritzdüse 228 spritzt dabei ein Edukt oder einen Teil der Reaktionsmischung in die Reaktionskammer 212. Parallel dazu lässt sich die Reaktionskammer 212 auch durch das Sieb 217 befüllen. Wenn die Reaktionskammer 212 das Verschlussegment passiert hat (siehe 212'), kommt es in der Reaktionskammer zu einem Druckabfall, wodurch die gewünschte Reaktion abläuft. Das dabei entstehende Produkt wird radial nach außen geschleudert. In der Phase nach dem Verschlusssegment kann das Sieb 217 noch geöffnet sein, so dass noch zusätzliches Reaktionsgemisch in die Reaktionskammer gelangen kann. Durch diese Maßnahme lässt sich ein gewünschter Druckverlauf in der Reaktionskammer einstellen. Durch die Regelung des Auslassens und/oder durch die Regelung der Ventile lässt sich mit der Vorrichtung 201 beispielsweise ein Druckverlauf realisieren, der mit dem in Figur 2 gezeigten Verlauf korrespondiert (die auf den Kolben wirkende Kraft ist dabei proportional zu dem Unterdruck in der Reaktionskammer).

Wie bereits im Zusammenhang mit der Vorrichtung 1 der Figur 1 erwähnt, kann durch Anlegen einer elektrischen Spannung die chemische Reaktion gezielt gesteuert bzw. beeinflusst werden. Auch bei den Ausführungen mit der rotierenden Reaktionskammer 211 kann durch einen besonderen zeitlichen Verlauf der elektrischen Spannung die chemische Reaktion beeinflusst werden.

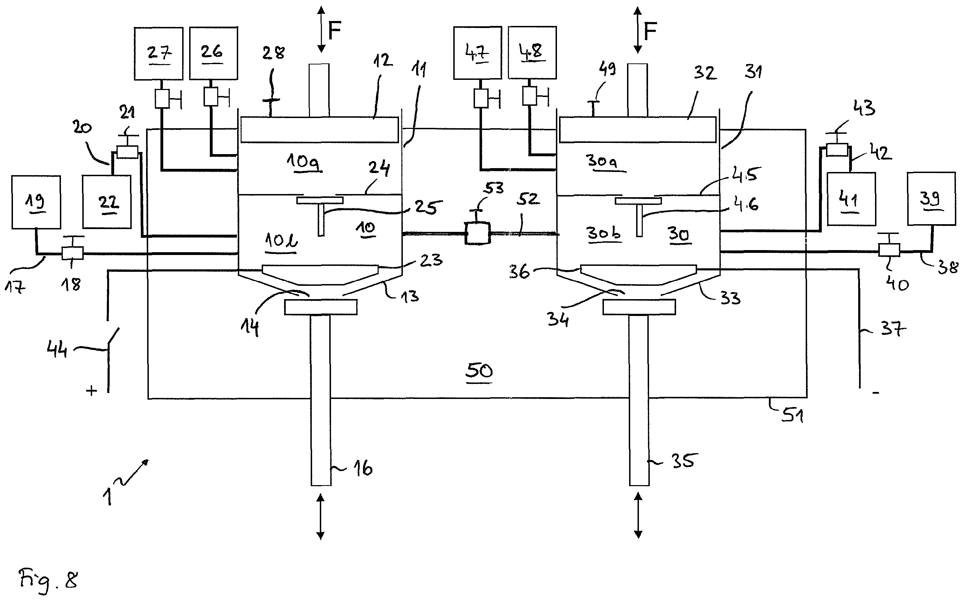

Figur 8 zeigt eine weitere Vorrichtung 1, die gegenüber der Vorrichtung in Figur 1 abgewandelt ist. Die erste Reaktionskammer 10 ist durch eine Trennwand 24 in zwei Unterkammern 10a, 10b unterteilt. Die Trennwand 24 weist eine Öffnung auf, die sich durch ein erstes Nebenventil 25 schließen lässt. An die Unterkammer 10a sind zwei weitere Behälter 26, 27 über steuerbare Ventile und Zuleitungen angeschlossen. Beispielsweise kann sich im Behälter 27 Pflanzenöl befinden. Der Inhaltsstoff im Behälter 27 kann sich aber auch von dem Inhaltsstoff des Behälters 19 unterscheiden. Der Behälter 26 dient dazu, das in der Unterkammer 10a entstehende Produkt aufzunehmen. Ein Entlüftungsventil 28 dient dazu, überschüssige Luft beim Entleeren oder Befüllen der ersten Reaktionskammer 10 entweichen zu lassen.

Analog wie die erste Reaktionskammer 10 ist auch die zweite Reaktionskammer 30 durch eine Trennwand 45 in zwei Unterkammern 30a, 30b unterteilt. Ein zweites Nebenventil 46 dient dazu, eine in der Trennwand 45 befindliche Öffnung zu schließen. Die Behälter 47, 48 dienen zur Aufnahme von Edukten oder Produkten der chemischen Reaktion in der Unterkammer 30a. Zudem sind die Reaktionskammer 10, 30 durch eine Leitung 52 verbunden, die sich durch ein Ventil 53 öffnen bzw. schließen lässt.

Am Beispiel der ersten Reaktionskammer 10 wird die Wirkungsweise beschrieben: Wenn der Kolben 12 nach oben gezogen wird, ist das erste Nebenventil 25 zunächst geöffnet. In beiden Unterkammern 10a, 10b führt somit die Bewegung des Kolbens 12 zu einem Druck in der Nähe des Kavitationsdrucks. Auch wenn dabei das erste Hauptventil geschlossen ist, ist weiterhin durch die Leitung 52 mit dem geöffneten Ventil 53 eine Spannung zwischen der Anode 23 und der Kathode 36 in der zweiten Reaktionskammer gegeben. Durch die angelegte Spannung sammeln sich an der Anode 23 negativ geladene Anionen, während sich an der Kathode 36 positiv geladene Kationen sammeln. Mit anderen Worten sind insbesondere die Unterkammer 10b der ersten Reaktionskammer 10 mit Anionen und die Unterkammer 30b der zweiten Reaktionskammer 30 mit Kationen gefüllt.

Wenn unmittelbar vor der Druckrelaxierung das erste Nebenventil 25 und das Ventil 53 geschlossen werden, sind die Kationen und die Anionen voneinander getrennt. Auch ist es nicht möglich, dass die Anionen in der Unterkammer 10b in die Unterkammer 10a gelangen können, in der sich im Vergleich zur Unterkammer 10a deutlich weniger Anionen bzw. anders geartete Anionen befinden. Durch Öffnen des Ventils 18 und des dem Behälter 27 vorgeschalteten Ventil fällt der in den Unterkammern 10a, 10b herrschende Unterdruck in geregelter Weise zusammen. Die in der Unterkammer 10a befindlichen Stoffe formen sich zu dem Produkt, welche nach erfolgter Reaktion in den Behälter 26 geführt wird. Die Anionen in der Unterkammer 10b reagieren ebenfalls und führen dort zu einem Produkt, das sich aber vom Produkt der Unterkammer 10a unterscheidet. Analoge Verhältnisse stellen sich in der zweiten Reaktionskammer 30 ein, wobei sich insbesondere direkt an der Kathode 36 atomare Kationen ansammeln können. Auch hier wird die chemische Reaktion oder der sogenannte 0-Punkt, in dem durch den Unterdruck und die angelegte Spannung die Edukte der chemischen Reaktion in einen Spannungszustand versetzt werden, der die besondere chemische Reaktion erst ermöglicht, durch den zeitlichen Verlauf der elektrischen Spannung und die darauf abgestimmten Öffnungszeiten der oben beschriebenen Ventile exakt gesteuert.

Nachteilig und problematisch für etablierte Reaktionsführungen ist, dass entweder Kavitation ausgeschlossen oder sichergestellt werden soll. Die bei der Kavitation anfallende, überschüssige Energie wurde bis jetzt nicht als Problem erkannt, welches sinnvolle Kavitationseffekte schwächt und beeinträchtigt. Sinnvolle Kavitationseffekte sollen hier Effekte sein, die sich hinsichtlich der Ausbeute des Produkts in der Nähe des Kavitationsdrucks einstellen, ohne dass es aber zu der eigentlichen Kavitation kommt (Bildung von Dampfblasen und deren plötzlichen Zerfall).

Die Lösung des Problems wird erstmals durch ein Verfahren zugänglich, welches durch eine Reaktionsführung nahe am Kavitationspunkt eine verstärkte, kinetische Kontrolle, bevorzugt unterstützt durch elektrische Felder und/oder Ströme, bereitstellt. Kinetisch kontrollierte Produkte, welche als metastabile, reaktive Verbindungen deutlich wertvoller und vielseitig verwendbarer sind, werden so mit besserer Ausbeute bei geringeren Kosten zugänglich. Insbesondere Treibstoffe lassen sich so kostengünstig veredeln.

### Bezugszeichenliste

- 1: Vorrichtung

- 10: Erste Reaktionskammer
- 11: Zylinder
- 12: Kolben
- 13: Ende
- 14: Öffnung
- 16: Erstes Hauptventil
- 17: Zuleitung
- 18: Ventil
- 19: Behälter
- 20: Zuleitung
- 21: Ventil
- 22: Behälter
- 23: Anode
- 24: Trennwand
- 25: Erstes Nebenventil
- 26: Behälter
- 27: Behälter
- 28: Entlüftungsventil

- 30: Zweite Reaktionskammer
- 31: Zylinder
- 32: Kolben
- 33: Ende
- 34: Öffnung
- 35: Zweites Hauptventil
- 36: Kathode
- 37: Stromkreis
- 38: Zuleitung
- 39: Behälter
- 40: Ventil
- 41: Behälter
- 42: Zuleitung
- 43: Ventil
- 44: Schalter
- 45: Trennwand
- 46: Zweites Nebenventil
- 47: Behälter
- 48: Behälter
- 49: Entlüftungsventil

- 50: Verbindungskammer
- 51: Behälter
- 52: Leitung
- 53: Ventil

- 101: Vorrichtung
- 102: Reaktionskammer
- 103: Erste Vorkammer
- 104: Zweite Vorkammer
- 105: Öffnung
- 106: Pfeil
- 107: Öffnung
- 108: Pfeil
- 109: Erste Düsenvorrichtung
- 110: Ventil
- 111: Zweite Düsenvorrichtung
- 112: Ventil
- 113: Abfluss
- 114: Öffnung
- 115: Ventil

- 201: Vorrichtung
- 202: Kammer
- 203: Drehachse
- 204: Kreisel
- 205: Obere Öffnung
- 206: Ventil
- 207: Pfeil
- 208: Öffnung
- 209: Untere Öffnung
- 210: Ventil
- 211: Reaktionskammer
- 212: Längsachse
- 213: Rohr
- 214: Ende
- 215: Linie
- 216: Linie
- 217: Sieb
- 218: Ventil
- 219: Sieb nadeln
- 220: Richtung
- 221: Pfeil
- 222: Einlassöffnung
- 223: Öffnung
- 224: Doppelpfeil
- 225: Lochscheibe
- 226: Öffnung
- 227: Verschlusssegment

## Patentansprüche

1. Verfahren zur Regelung einer chemischen Reaktion, welche ein metastabiles Produkt erzeugt, wobei wenigstens ein Edukt, das in einer flüssigen Phase vorliegt, oder ein Gemisch von Edukten, von denen wenigstens ein Edukt in einer flüssigen Phase vorliegt, einer Druckänderung unterworfen wird, wobei ein Minimalwert des Drucks höchstens 105 %, bevorzugt höchstens 103 %, besonders bevorzugt höchstens 101 % dem Kavitationsdruck desjenigen Edukts entspricht, das, wenn der Druck von einem Startwert auf den Minimalwert reduziert wird, als erstes in die Dampfphase übergeht, so dass keine Kavitation irgendeines Edukts auftritt, bei der durch Bildung von Dampfblasen und deren plötzlichen Zerfall Energie in Form von Wärme freigesetzt wird, **dadurch gekennzeichnet, dass** der Druck während der Reaktion geregelt wird, wobei der Druck von dem Startwert auf den Minimalwert reduziert wird, bei dem eine Ausbeute des metastabilen Produkts wirksam gesteigert wird, und danach auf einen Zielwert, der im Wesentlichen dem Startwert entsprechen kann, erhöht wird, wobei die Zeit zur Reduzierung des Drucks vom Startwert zum Minimalwert kleiner ist als die Zeit zur Erhöhung des Drucks vom Minimalwert auf den Zielwert, um einen plötzlichen Zerfall der Dampfblasen auszuschließen, durch den aus dem metastabilen Produkt unerwünschte, thermodynamisch stabilere Verbindungen entstehen würden, wobei das Edukt durch mechanische Vibration, durch Schallwellen oder durch elektromagnetische Wellen in Schwingung versetzt wird.

2. Verfahren nach Anspruch 1, **dadurch gekennzeichnet, dass** ein Druckunterschied zwischen dem Minimalwert des Drucks und dem Kavitationsdruck kleiner als 20 mbar ist.

3. Verfahren nach Anspruch 1 oder 2, **dadurch gekennzeichnet, dass** die chemische Reaktion in einer Reaktionskammer (10) herbeigeführt wird, wobei ein Volumen der Reaktionskammer variiert wird.

4. Verfahren nach Anspruch 3, **dadurch gekennzeichnet, dass** für die Variation des Volumens der Reaktionskammer ein Kolben (12) eingesetzt wird, durch den vor der chemischen Reaktion das Edukt in die Reaktionskammer (10) gezogen wird und nach der Reaktion durch den Kolben (12) das Produkt aus der Reaktionskammer (10) gedrückt wird.

5. Verfahren nach einem der vorhergehenden Ansprüche, **dadurch gekennzeichnet, dass** der Kavitationsdruck des Edukts in zeitlichen Abständen kleiner als 30 Minuten ermittelt wird.

6. Verfahren nach einem der vorhergehenden Ansprüche, **dadurch gekennzeichnet, dass** der Kavitationsdruck kontinuierlich ermittelt wird.

7. Verfahren nach Anspruch 5 oder 6, **dadurch gekennzeichnet, dass** der Minimalwert des Drucks und/oder ein zeitlicher Verlauf des Drucks der chemischen Reaktion in Abhängigkeit des ermittelten Kavitationsdrucks geregelt wird.

8. Verfahren nach einem der vorhergehenden Ansprüche, **dadurch gekennzeichnet, dass** das Produkt mindestens ein Produkt ist ausgewählt aus der Gruppe bestehend aus Kohlenwasserstoff, Aminosäure, Eiweiß, Peptid, Glycerin, Fettsäure, Fett, Zucker, Alkohol, Vitamin, Ammoniak, nanoskalige Feststoffe, nanoskaliges Silizium, Leichtbenzin, Kohlenwasserstoff mit gekürzter Kettenlänge, hydrierter Kohlenwasserstoff, Moleküle und/oder Verbindungen mit Dipolmoment, ionische Verbindungen, Salze.

## Claims

1. Method of controlling a chemical reaction, which generates a metastable product, wherein at least one reactant that is present in a liquid phase, or a mixture of reactants, of which at least one reactant is present in a liquid phase, is subjected to a change in pressure, wherein a minimum value of the pressure is at most 105%, preferably at most 103%, particularly preferably at most 101% of the cavitation pressure of that reactant which, when the pressure is reduced from an initial value to the minimum value, first passes into the vapour phase, so that no cavitation of any reactant occurs, in which energy is released in the form of heat by the formation of vapour bubbles and their sudden decay, **characterised in that** the pressure is controlled during the reaction, wherein the pressure is reduced from the initial value to the minimum value, whereby a yield of the metastable product is effectively increased, and thereafter increased to a target value which may be substantially equal to the initial value, the time to reduce the pressure from the initial value to the minimum value being less than the time to increase the pressure from the minimum value to the target value, in order to exclude a sudden decay of the vapour bubbles by which undesirable, thermodynamically more stable compounds would be formed from the metastable product, wherein the reactant is set into oscillation by mechanical vibration, by sound waves or by electromagnetic waves.

2. Method according to claim 1, **characterised in that** a pressure difference between the minimum value of the pressure and the cavitation pressure is smaller than 20 mbar.

3. Method according to claim 1 or 2, **characterised in that** the chemical reaction is carried out in a reaction chamber (10), a volume of the reaction chamber being varied.

4. Method according to claim 3, **characterised in that** for the variation of the volume of the reaction chamber a piston (12) is used, by which the reactant is drawn into the reaction chamber (10) before the chemical reaction, and after the reaction the product is pressed out of the reaction chamber (10) by the piston (12).

5. Method according to any one of the preceding claims, **characterised in that** the cavitation pressure of the reactant is determined at intervals of less than 30 minutes.

6. Method according to any one of the preceding claims, **characterised in that** the cavitation pressure is determined continuously.

7. Method according to claim 5 or 6, **characterised in that** the minimum value of the pressure and/or a behaviour of the pressure of the chemical reaction over time is controlled in dependence on the determined cavitation pressure.

8. Method according to any one of the preceding claims, **characterised in that** the product is at least one product selected from the group consisting of hydrocarbon, amino acid, protein, peptide, glycerol, fatty acid, fat, sugar, alcohol, vitamin, ammonia, nanoscale solids, nanoscale silicon, petroleum ether, shortened chain-length hydrocarbon, hydrogenated hydrocarbon, molecules and/or compounds with dipole moment, ionic compounds, salts.

## Revendications

1. Procédé de régulation d'une réaction chimique qui donne un produit métastable, dans lequel au moins un produit de départ, qui se trouve dans une phase liquide, ou un mélange de produits de départ, dont au moins un produit de départ se trouve dans une phase liquide, est soumis à une modification de pression, dans lequel une valeur minimale de la pression correspond au plus à 105 %, de préférence au plus à 103 %, plus préférablement au plus à 101 % de la pression de cavitation du produit de départ qui, lorsque la pression est réduite d'une valeur de départ à la valeur minimale, passe le premier en phase vapeur, de sorte qu'il ne se produit aucune cavitation d'un quelconque produit de départ, dans laquelle de l'énergie est libérée sous forme de chaleur par la formation de bulles de vapeur et leur désintégration soudaine, **caractérisé en ce que** la pression est régulée pendant la réaction, dans lequel la pression est réduite de la valeur de départ à la valeur minimale, à laquelle un rendement du produit métastable est efficacement accru, et ensuite augmentée à une valeur cible qui peut sensiblement correspondre à la valeur de départ, dans lequel le temps pour réduire la pression de la valeur de départ à la valeur minimale est inférieur au temps pour augmenter la pression de la valeur minimale à la valeur cible, afin d'exclure une désintégration soudaine des bulles de vapeur, par laquelle des liaisons indésirables, thermodynamiquement plus stables, seraient formés à partir du produit métastable, dans lequel le produit de départ est mis en vibration par une vibration mécanique, par des ondes sonores ou par des ondes électromagnétiques.

2. Procédé selon la revendication 1, **caractérisé en ce qu'**une différence de pression entre la valeur minimale de la pression et la pression de cavitation est inférieure à 20 mbar.

3. Procédé selon la revendication 1 ou 2, **caractérisé en ce que** la réaction chimique est provoquée dans une chambre de réaction (10), dans lequel un volume de la chambre de réaction est variable.

4. Procédé selon la revendication 3, **caractérisé en ce que,** pour faire varier le volume de la chambre de réaction, est utilisé un piston (12) par lequel, avant la réaction chimique, le produit de départ est attiré dans la chambre de réaction (10) et, après la réaction, le produit est poussé hors de la chambre de réaction (10) par le piston (12).

5. Procédé selon l'une quelconque des revendications précédentes, **caractérisé en ce que** la pression de cavitation du produit de départ est déterminée à des intervalles de temps inférieurs à 30 minutes.

6. Procédé selon l'une quelconque des revendications précédentes, **caractérisé en ce que** la pression de cavitation est déterminée de manière continue.

7. Procédé selon la revendication 5 ou 6, **caractérisé en ce que** la valeur minimale de la pression et/ou une évolution temporelle de la pression de la réaction chimique est régulée en fonction de la pression de cavitation déterminée.

8. Procédé selon l'une quelconque des revendications précédentes, **caractérisé en ce que** le produit est au moins un produit sélectionné parmi le groupe constitué d'hydrocarbure, d'acide aminé, de protéine, de peptide, de glycérine, d'acide gras, de graisse, de sucre, d'alcool, de vitamine, d'ammoniac, de solides nanométriques, de silicium nanométrique, d'essence légère, d'hydrocarbure à chaîne raccourcie, d'hydrocarbure hydrogéné, de molécules et/ou liaisons à moment dipolaire, de composés ioniques, de sels.
